# EUROPEAN PATENT SPECIFICATION

(11) **EP 3 021 438 B1**
(45) Date of publication and mention of the grant of the patent: **02.01.2019**
(21) Application number: 15194615.9
(22) Date of filing: 13.11.2015
(51) Int. Cl.: H02G 3/08, H02G 3/14

(54) **ELECTRICAL INSULATING BOX WITH TWO OPTIONS OF TIGHTNESS DEGREE FOR ELECTRICITY, INFORMATION TECHNOLOGY AND/OR TELEPHONY**
ELEKTRISCH ISOLIERENDES GEHÄUSE MIT ZWEI OPTIONEN DES DICHTIGKEITSGRADES FÜR ELEKTRIZITÄT, INFORMATIONSTECHNOLOGIE UND/ODER TELEFONIE
BOÎTE D'ISOLATION ÉLECTRIQUE AVEC DEUX OPTIONS DE NIVEAUX D'ÉTANCHÉITÉ POUR L'ÉLECTRICITÉ, LES TECHNOLOGIES DE L'INFORMATION ET/OU LA TÉLÉPHONIE

(30) Priority: 17.11.2014 AR P140104308
(43) Date of publication of application: 18.05.2016
(73) Proprietor: Ambros, Rodolfo, 1752 Buenos Aires (AR)
(72) Inventor: Ambros, Rodolfo, 1752 Buenos Aires (AR)
(74) Representative: Corradini, Corrado

(56) References cited:
- EP-A1- 1 434 327
- EP-A1- 1 860 748
- US-A- 5 361 925
- GEWISS: "Cassette di derivazione stagne - Serie 44CE", , 1 March 2011 (2011-03-01), XP055258712, Retrieved from the Internet: URL:http://docs-europe.electrocomponents.c om/webdocs/109f/0900766b8109feb1.pdf [retrieved on 2016-03-16]

## Description

### Field of Application

The present invention belongs to the scope of boxes used in electrical installations, being applicable for the placement of electrical components, information technology or telephony inside them, or simply for passing electrical, information technology or telephone wires, being these boxes able to be installed outside or inside a building. These boxes are usually built in a home, industrial, or commercial electrical installation.

### State of Art

Boxes known up to now are typically made of an electrical insulating material and normally have a cover with a perimeter slot in which a weather strip is located, and said cover is fixed by means of four screws to a base having a protrusion all around its perimeter which matches the slot of the cover, applying pressure on said weather strip on a contact line on all the perimeter of the box.

These boxes have the feature that when the cover is removed from the base, the cover is detached from the base totally which prevents the placement of any electrical component on the same cover, since the cover/electrical component(s) assembly would be hanging from the connection wires joining the electrical components placed on the base with the ones on the cover. Also known are boxes in which one or two out of the four screws used to fix the cover to the base have circular section plastic extension that allows the cover not to completely separate from the base, but leaving the cover bent as regards the base.

Likewise, boxes are known to which additional hinges are placed with pressure or screwed so that the cover may turn as regards the base.

Therefore, there is a need for an electrical insulating box that, without the placement of a weather strip, is air-tight and fit for installation outside, and that in order to achieve a higher air-tightness degree for the same box, a weather strip may be located with three contact lines all around its perimeter and without being additional such as a hinge set, allows, with two fixing screws, the cover not to separate from the base easily or that when said cover is opened it may be bent as regards the base, allowing for the location of electric components on said cover.

The brochrue of Gewiss "Cassette di derivazione stagne - Serie 44CE" of 1 March 2011 discloses an electrical insulating box according to the preamble of claim 1.

### Object of the Invention

It is therefore an object of the present invention an electrical insulating box with two air-tightness degrees for electricity, information technology and/or telephony, comprising:
a) a base (1) with four orifices (2), and a protrusion (3) with perimeter closure on the border of said base (1),
b) a cover (4) having four orifices (5) for passing two screws (10) and two screws (7), and a slot (6) with perimeter closure on the border of said cap (4),
c) four circular covers (12) that hide the head of the screws for the fixing of the box to the masonry,
d) two screws (7),
e) two screws (10), and
f) four circular covers (11) that hide the head of the screws (7) and the screws (10);
wherein, when the box is closed, the protrusion (3) with perimeter closure of the base(1) engages into the slot (6) with perimeter closure contacting and said protrusion being flexed (3) on all the perimeter (13);
wherein, each screw (7) has fastenings (18) for closure of the cover (4) on the base (1) through the corresponding orifices (2), and a tape (8) at 45 degrees from the fastening line (18) and at 45 degrees from a fastening (9), being this fastening (9) at 90 degrees from the fastening line (18);
wherein, each screw (10) has fastenings (19) for closure of the cover (4) on the base (1) through the corresponding openings (2) and wherein, the screws (7) and the screws (10) are disposed on contiguous corners of the base(1).

Preferably, for a higher air-tightness, the above described electrical insulating box comprises an "S" shaped section elastic weather strip inserted into the slot of the cover (4) providing three perimeter contact lines (14), (15) and (16) on the closure zone of the box between the cover (4) and the base (1).

In another preferred embodiment of the electrical insulating box, the walls of the perimeter slot of the cover (4) fit inside a "W" section perimeter slot with perimeter closure of the base(1) providing, by flexion, two perimeter contact lines (20) and (21) on the closure zone of the box between the cover (4) and the base (1).

Even more preferably for a higher air-tightness, the electrical insulating box comprises an elastic weather strip (22) of section in "O" inserted into the slot of the cover (4) providing three contact lines (29), (30) and (31) on the closure zone of the box.

In yet another preferred embodiment of the electrical insulating box, the walls of the perimeter slot of the cover (4) fit inside a "U" section perimeter slot with perimeter closure of the base (1) providing, by flexion, an external perimeter contact line (23) and two support perimeter surfaces (32) and (33) inside the closure zone of the box between the cover (4) and the base (1).

More preferably, for a higher air-tightness, the electrical insulating box comprises an elastic weather strip of section in "O" (24) inserted into the slot of the base (1) providing three contact surfaces (32), (33) and (34) and a perimeter contact line by flexion (23) on the closure zone of the box.

In still another preferred embodiment of the electrical insulating box, the walls of the perimeter slot of the cover (4) fit inside a "U" section perimeter slot with perimeter closure of the base (1) providing a perimeter contact line by internal flexion (25) and two support perimeter surfaces (35) and (36), one internal and another external one, on the closure zone of the box between the cover (4) and the base (1).

Even more preferably, for a higher air-tightness, the electrical insulating box comprises an elastic weather strip of section in "O" (26) inserted into the slot of the base (1) providing three contact surfaces (35), (36) and (40), and a perimeter contact line by flexion (25) on the closure zone of the box.

In yet still another embodiment of the above described electrical insulating box, the walls of the perimeter slot of the cover (4) fit on protrusion perimeter (41) of the base (1) providing a perimeter contact line by internal flexion (27) and two support perimeter surfaces (37) and (38), one internal and another external one, on the closure zone of the box between the cover (4) and the base (1).

More preferably, for a higher air-tightness, the electrical insulating box comprises two "mushroom" section elastic weather strips, a weather strip (42) on the cover (4) and a weather strip (43) inserted into the slot of the base (1) providing a contact surface (44) and a contact line by flexion (27) against the protrusion (41) on the closure zone of the box.

### Brief Description of the Drawings

Figure 1 is a perspective exploded view of a preferred embodiment of an electrical insulating box according to the present invention, which shows the base, the cover, the fixing screws of the cover and the hiding caps for the heads of the fixing screws of the cover and the electrical insulation caps of the inner part of the box for the heads of the fixing screws of the base to the masonry.
Figure 2 is a perspective view of the box of Figure 1 with the cover open and turned on one of the sides thereof, and which shows the flexion of ribbons of the two lateral screws serving as hinges.
Figure 3 is a cross-sectional view of the separated cover and the base, corresponding to the closure zone of the cover with the slot and the base with the protrusion.
Figure 4 is a cross-sectional view of the cover and the base together corresponding to the closure zone of the cover with the slot and the base with the protrusion.
Figure 5 is a cross-sectional view of the cover (4) and the base (1) separated; corresponding to the closure zone of the cover with the slot and the base with the protrusion, with a weather strip located on the cover.
Figure 6 is a cross-sectional view of the cover (4) and the base (1) together, corresponding to the closure zone of the cover (4) with the slot and the base (1) with the protrusion, with the weather strip located on the cover and compressed by the protrusion of the base.
Figure 7 is a front view of a preferred embodiment of a fixing screw of the cover (4) to the base (1) of the box, prolonged by a tape to fold the cover.
Figure 8 is a side view of the fixing screw of the cover (4) to the base (1) of the box of Figure 7, prolonged by de ribbon to fold the cover.
Figure 9 is a front view of a preferred embodiment of a fixing screw of the cover (4) to the base (1) of the box.
Figure 10 is a cross-sectional view of another preferred embodiment of a section of the cover (4) and the base (1) joined together corresponding to the closed box.
Figure 11 is a cross-sectional view of another preferred embodiment of Figure 10 of a section of the cover (4) and the base (1) together corresponding to the closed box, with an elastic weather strip which provides a higher air-tightness.
Figure 12 is a cross-sectional view of another preferred embodiment of a section of the cover (4) and the base (1) together corresponding to the closed box.
Figure 13 is a cross-sectional view of another preferred embodiment of Figure 12 of a section of the cover (4) and the base (1) together corresponding to the closed box, with an elastic weather strip which provides a higher air-tightness.
Figure 14 is a cross-sectional view of still another preferred embodiment of a section of the cover (4) and the base (1) together corresponding to the closed box.
Figure 15 is a cross-sectional view of still another preferred embodiment of Figure 14 of a section of the cover (4) and the base (3) together corresponding to the closed box, with an elastic weather strip which provides a higher air-tightness.
Figure 16 is a cross-sectional view of still another preferred embodiment of a section of the cover (4) and the base (1) together corresponding to the closed box.
Figure 17 is a cross-sectional view of a still another preferred embodiment of Figure 16 of a section of the cover (4) and the base (1) together with two elastic weather strips corresponding to the closed box, which provides a higher air-tightness.

### Detailed Description of the Invention

The main object of the present patent of invention application is to promote an electrical insulating box for installations of electricity, information technology and/or telephony with two options of air-tightness for different degrees of impenetrability and which with no additional supports, such as a hinge set, permits that with two screws the cover is not separated from the base easily or is bended when opened.

Then, as a first option of air-tightness, it is proposed a box that allows to be placed either outside or in closed places, therefore the invention lays in the no need to place an elastic weather strip to achieve a seal enough that prevents the entering of solids or liquids that may damage the electrical components located inside the box.

As a second option of air-tightness, a weather strip may be placed on the same box allowing at least for three contact lines on all the perimeter of the closure of the box to achieve a higher air-tightness against, for example, water jets. Besides, the box includes a cover fixed by four fixing screws to the base, two of which a plastic tape they have allow for a turn on said ribbons and flexing them, thus avoiding the cover to be bent and preventing it easily detaches. The cover may be removed with a little twist of said two screws, thus allowing the fixing of electrical components on the cover.

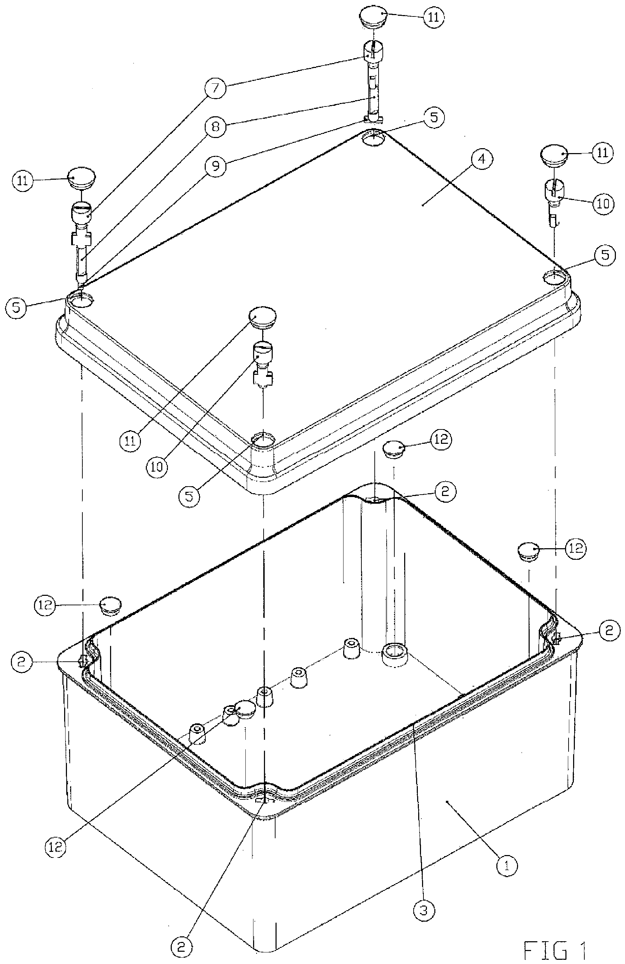

Figure 1 shows a preferred embodiment of an electrical insulating box for installations of electricity, information technology and/or telephony according to the present invention, the box is formed by a base (1) with four orifices (2), a protrusion (3) on all the closing perimeter of said base (1) and four circular covers (12) which allow to cover the head of the screws which should subsequently be placed for the fixing of the box to the masonry.

Also, this Figure 1 shows the cover (4), which has four openings (5) where two screws (10) and two screws (7) are inserted with which said cap (4) will be fixed to the base (1).

The screws (10) are only for fixing while the screws (7) allow that, once they are turned counter-clockwise in only 60 degrees, are removed to a top (9) which remains retained in the corresponding opening (2) such that the cover is joined to the base (1); and which in order to remove the cover (4) of the box the screws (7) should be turned again thus releasing the top (9) of the opening (2). This Figure 1 shows circular covers (11) which allow covering the head of the screws (7) and (10). The screws (7) have a ribbon shaped protrusion (8), which allows the cover (4), once removed and acting as a fastening for the top (9) of said flexing ribbon (8), allows it to rebut laterally thus discovering the inner part of the box.

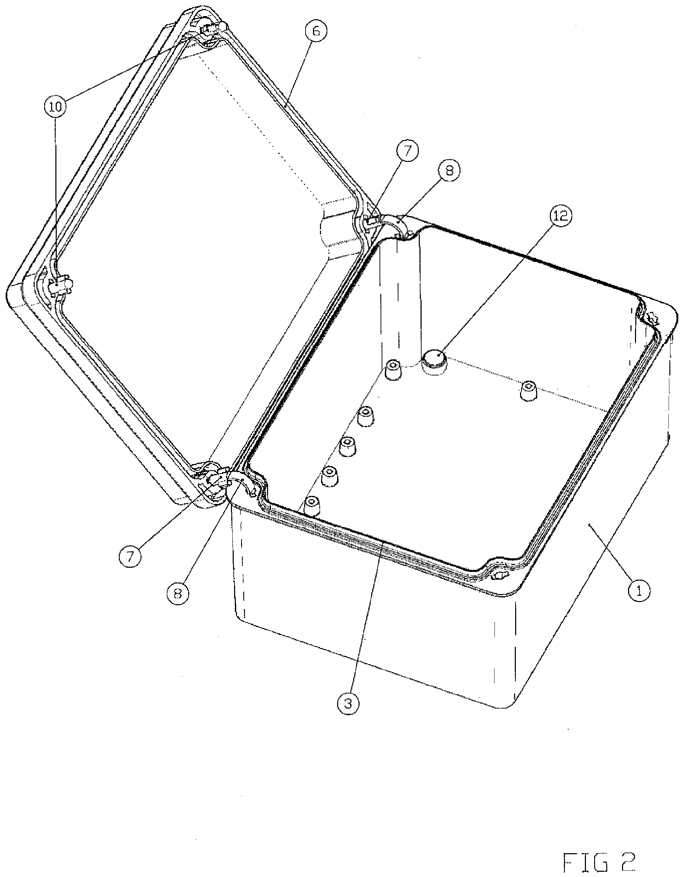

Figure 2 shows the box of Figure 1 but with the cover (4) opened and rebutted on one of the base edges, thanks to the low torsion moment in a turn sense producing the flexion of the ribbon (8) of the screws (7) and, at its turn, allowing the cover (4) not to be bent due to the high torsion moment at 90 degrees in the cover turning direction (4) having in this sense the ribbon (8) of the screws (7). Also, Figure 2 shows the slot (6) on the cover (4) and the protrusion (3) at the base (1), the fixing screws (10) and the covers (12) covering the heads of the fixing screws of the box to the masonry.

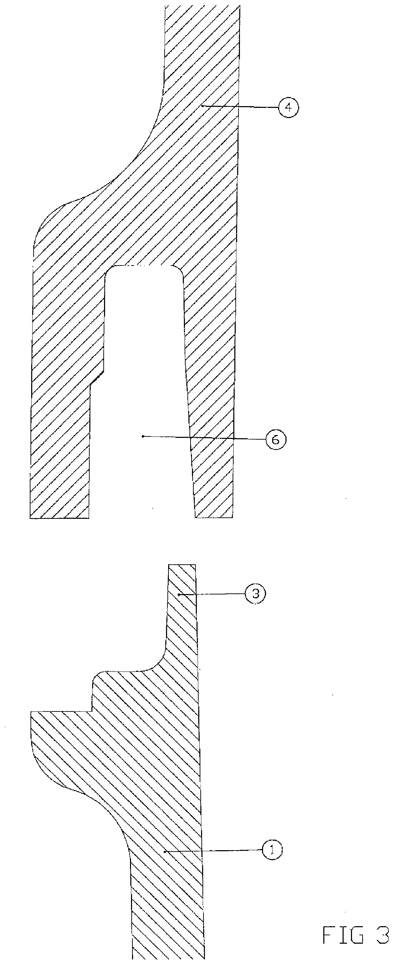

Figure 3 shows the cross-section of the cover (4) on the closure zone, which shows the slot (6) of said cap (4) and in the same Figure 3 a cross-section of the base (1) which has a protrusion (3). As shown in Figure 2, both the slot (6) and the protrusion (3) are located on all the perimeter of the cover (4) as well as at the base (1), such that when opposing said cap (4) with said base (1) the protrusion (3) and the slot (6) are perfectly faced.

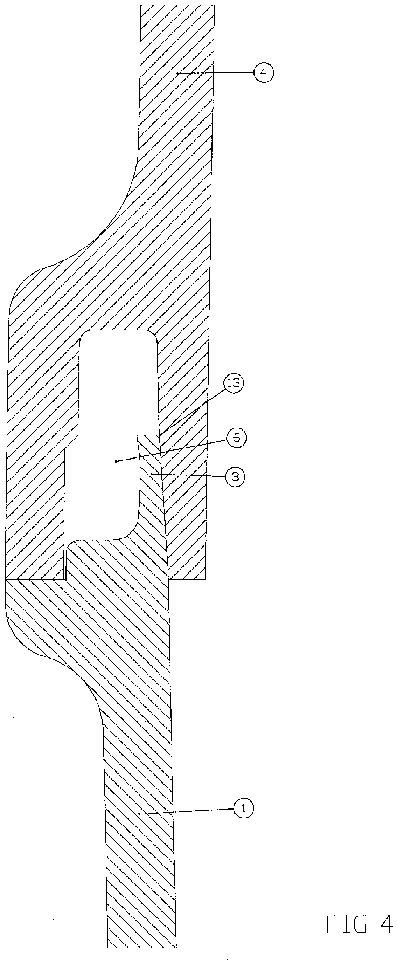

Figure 4 shows the first of both options of air-tightness degree which allows the box of the present invention, which like in Figure 3 the cross-section of the cover (4) on the closure zone which shows the slot (6) of said cap (4) and a cross-section of the base (1) which has a protrusion (3).

Due to the joining of the cover (4) and the base (1), in this Figure 4 it is shown the contact point (13) achieve due to a small flexion of the protrusion (3) alongside all the closing perimeter of the box, an air-tightness degree being obtained which allows using the box outside without the need to place a weather strip as a seal.

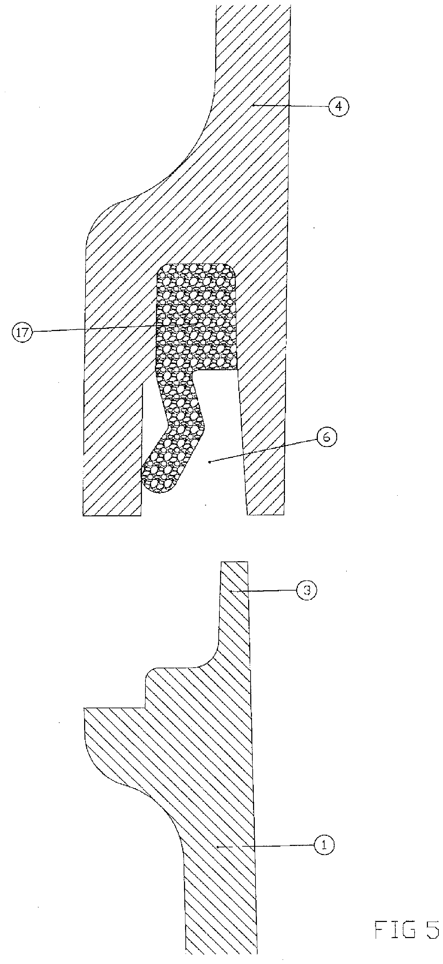

Figure 5 shows, as well as in Figure 3, the cross-section of the cover (4) on the closure zone which shows the slot (6) of said cap (4) and a cross-section of the base (1), which has a protrusion (3) and at the slot (6) an elastic weather strip is also located (17).

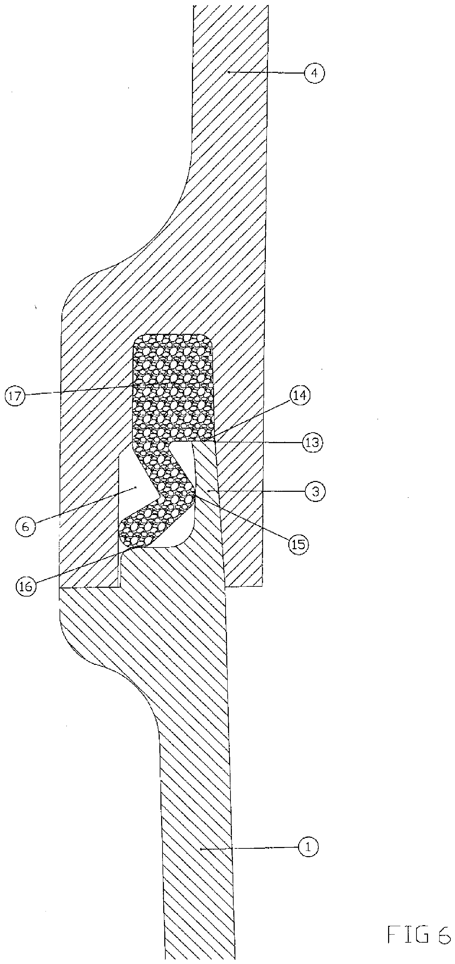

Figure 6 shows de second one of both options of air-tightness degree which allows the box according to the present invention. In said Figure 6, as well as in Figure 5, the cross-section of the cover (3) is shown on the closure zone, which shows the slot (6) of said cap (4), and a cross-section of the base (1), which has a protrusion (3).

Due to the joining of the cover (4) and the base (1) in this Figure 6, it is shown that also the contact point (13) achieved by means of a small flexion of the protrusion (3) alongside all the closing perimeter of the box, also shown are other three linear contacts (14), (15) and (16) alongside all the perimeter of the box, thus achieving a higher air-tightness in case of, for example, water jets.

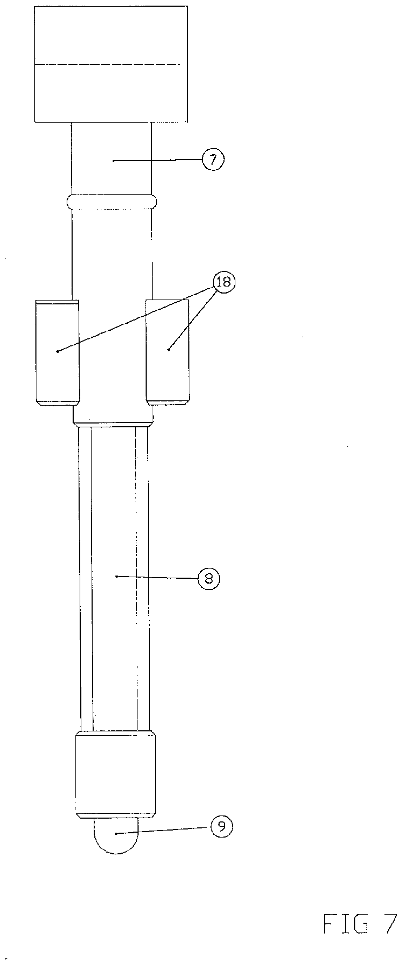

Figure 7 is a front view which shows the screw (7), which has the fastenings (18) which are the ones that allow the cover (4) to be closed on the base (1) when introduced in the openings (2). Ribbon (8) is shown on the same screw which is at 45 degrees from the fastening line (18) and at 45 degrees from the fastening (9). This fastening (9) is in turn at 90 degrees from the fastening line (18).

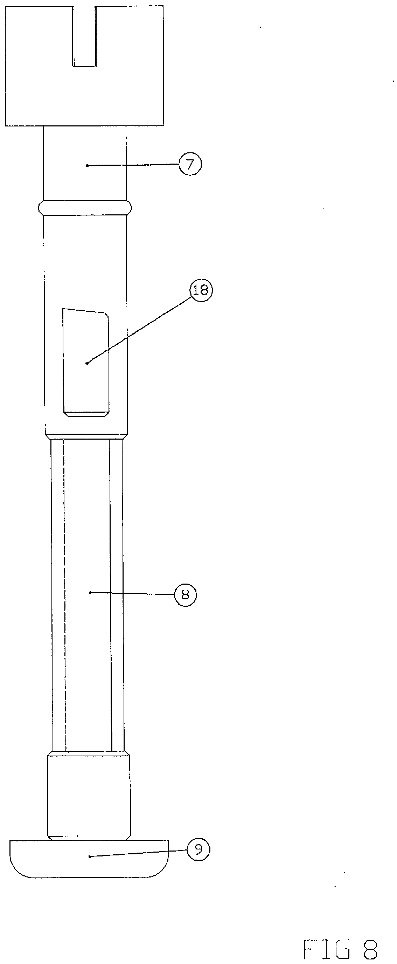

Figure 8 is a side view which shows the screw (7), which has the fastenings (18) which are the ones that allow the cover (4) to be closed on the base (1) when introduced in the openings (2). On the same screw the ribbon (8) is shown that is at 45 degrees from the fastening line (18) and at 45 degrees from the fastening (9). This fastening (9) is, also, at 90 degrees from the fastening line (18).

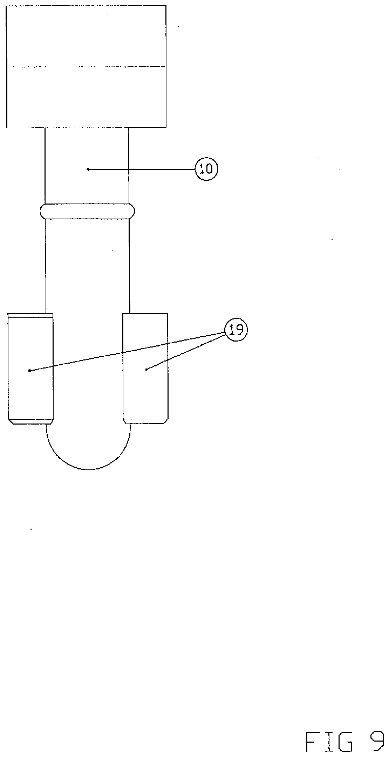

In Figure 9 it is shown the screw (10) which allows closing the cover (4) to the base (1) through the fastenings (19) such as shown in Figures 1 and 2. Therefore, the electrical insulating box with two air-tightness degrees for electricity, information technology and/or telephony, according to the present invention comprising:
a) a base (1) with four orifices (2), and a protrusion (3) with perimeter closure on the border of said base (1),
b) a cover (4) having four orifices (5) for passing two screws (10) and two screws (7), and a slot (6) with perimeter closure on the border of said cap (4),
c) four circular covers (12) that hide the head of the screws for the fixing of the box to the masonry,
d) two screws (7),
e) two screws (10), and
f) four circular covers (11) that hide the head of the screws (7) and the screws (10);
wherein, when the box is closed, the protrusion (3) with perimeter closure of the base (1) engages into the slot (6) with perimeter closure contacting and said protrusion being flexed (3) on all the perimeter (13);
wherein, each screw (7) has fastenings (18) for closure of the cover (4) on the base (1) through the corresponding orifices (2), and a tape (8) at 45 degrees from the fastening line (18) and at 45 degrees from a fastening (9), being this fastening (9) at 90 degrees from the fastening line (18),
wherein, each screw (10) has fastenings (19) for closure of the cover (4) on the base (1) through the corresponding openings (2), and
wherein, the screws (7) and the screws (10) are disposed on contiguous corners of the base (1).

Additionally, this preferred embodiment of the electrical insulating box of the present invention comprises an "S" (17) shaped section elastic weather strip inserted into the slot (6) of the cover (4) providing three perimeter contact lines (14) (15) and (16) on the closure zone of the box between the cover (4) and the base (1).

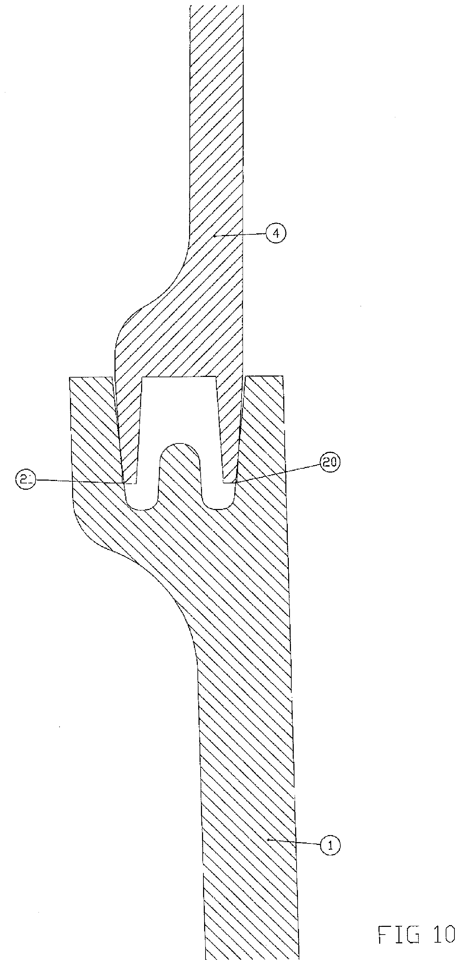

The closure may be formed with different forms to achieve the same objective of having two options of air-tightness with the same basic structure, except for the addition of an elastic joint providing a higher impenetrability by supplying a higher amount of perimeter contact points between the cover and the base. Figure 10 is a cross-sectional view of another preferred embodiment of the closure between the cover (4) and the base (1) of the electrical insulating box with two air-tightness degrees for electricity, information technology and/or telephony, according to the present invention.

The walls of the perimeter slot of the cover (4) of this electrical insulating box fit inside a "W" section perimeter slot with perimeter closure of the base (1) providing two perimeter contact lines by flexion (20) and (21) on the closure zone of the box between the cover (4) and the base (1).

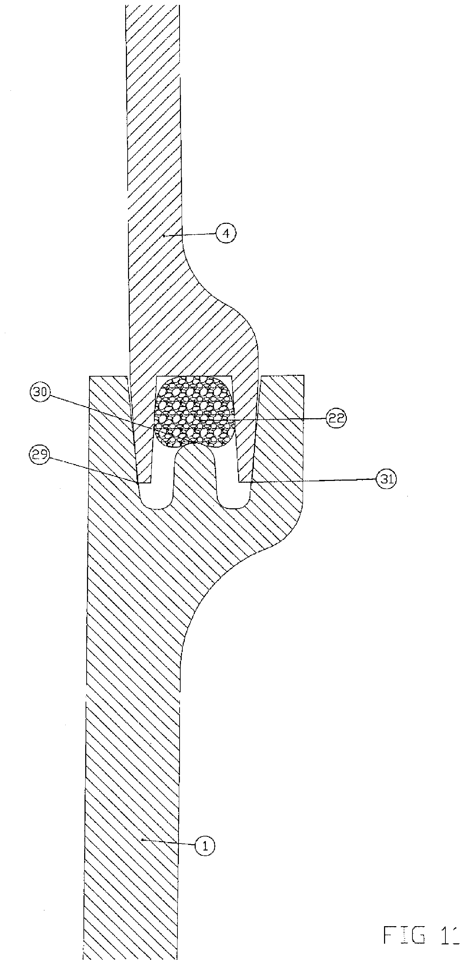

Figure 11 is a cross-sectional view of the other preferred embodiment of the closure between the cover (4) and the base (1) of Figure 10, for a higher air-tightness, with a joint made of an elastic weather strip (22) disposed on the cover (4).

This embodiment of the electrical insulating box comprises an elastic weather strip (22) of section in "O" inserted into the slot of the cover (4) providing three contact lines (29), (30) and (31) on the closure zone of the box.

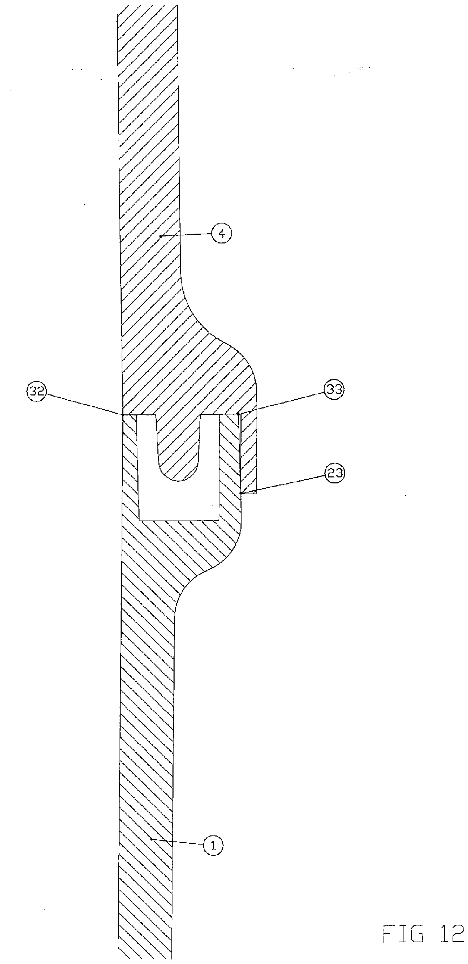

Figure 12 is a cross-sectional view of still another preferred embodiment of the closure between the cover (4) and the base (1) of the electrical insulating box with two air-tightness degrees for electricity, information technology and/or telephony according to the present invention, wherein there is a contact line by flexion (23) perimeter between the cover (4) and the base (1).

The walls of the perimeter slot of the cover (4) of this electrical insulating box fit inside a "U" section perimeter slot with perimeter closure of the base (1) providing a perimeter contact line by external flexion (23) and two support perimeter surfaces (32) and (33) inside the closure zone of the box between the cover (4) and the base (1).

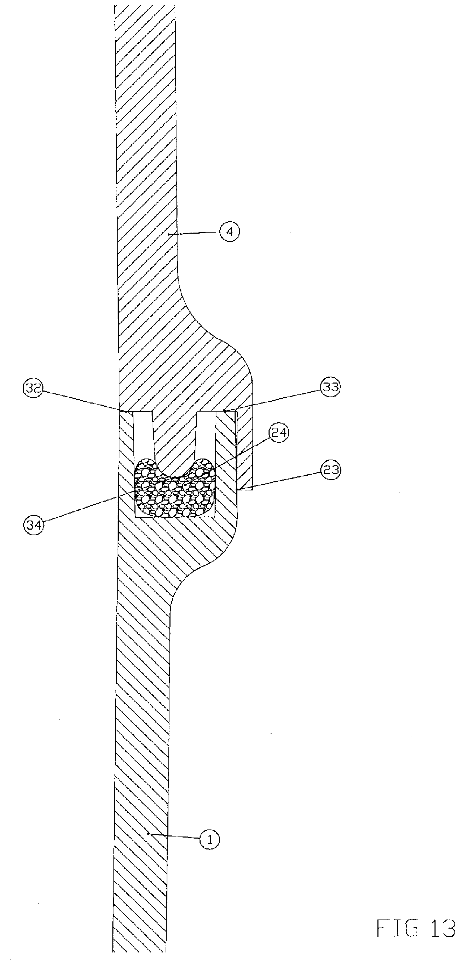

Figure 13 is a cross-sectional view of the still another preferred embodiment, for a higher air-tightness, of the closure between the cover (4) and the base (1) of Figure 12 con a joint made of an elastic weather strip (24) disposed at the base (1).

This embodiment of the electrical insulating box of the present invention comprises an elastic weather strip of section in "O" (24) inserted into the slot of the base (1) providing three contact perimeter surfaces (32), (33) and (34) and a contact line by flexion (23) on the closure zone of the box.

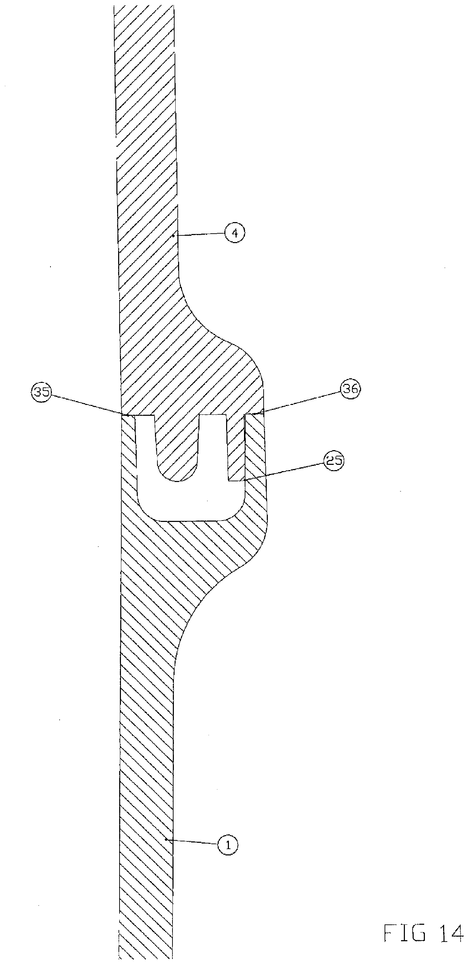

Figure 14 is a cross-sectional view of still another preferred embodiment of the closure between the cover (4) and the base (1) of the electrical insulating box with two air-tightness degrees for electricity, information technology and/or telephony according to the present invention, wherein there is a contact line by flexion (25) perimeter between the cover (4) and the base (1).

The walls of the perimeter slot of the cover (4) of this electrical insulating box fit inside a "U" section perimeter slot with perimeter closure of the base (1) providing a perimeter contact line by internal flexion (25) and two support perimeter surfaces (35) and (36), one internal and another external one, on the closure zone of the box between the cover (4) and the base (1).

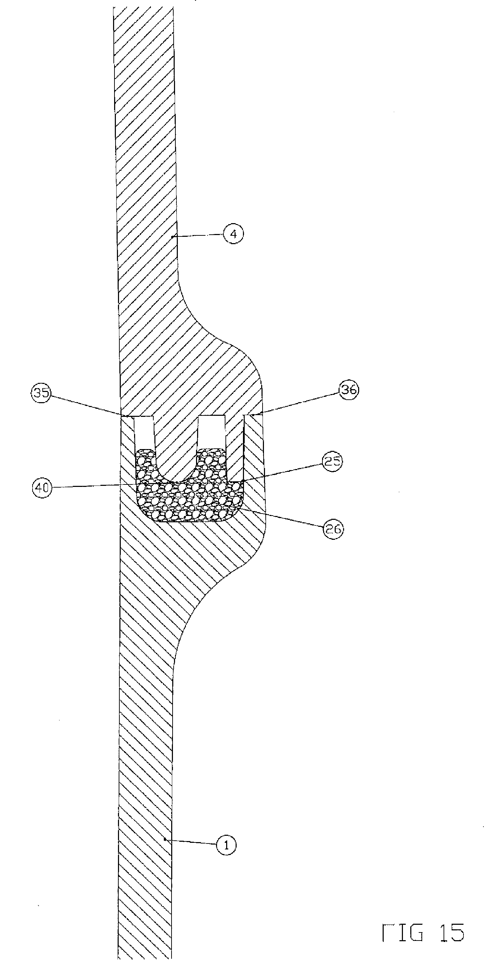

Figure 15 is a cross-sectional view of the still another preferred embodiment of the closure between the cover (4) and the base (1) of Figure 14 con a joint made of an elastic weather strip (26) disposed at the base (1).

This another embodiment of the electrical insulating box comprises an elastic weather strip of section in "O" (26) inserted into the slot of the base (1) providing three contact surfaces (35), (36) and (40), and a perimeter contact line by flexion (25) on the closure zone of the box.

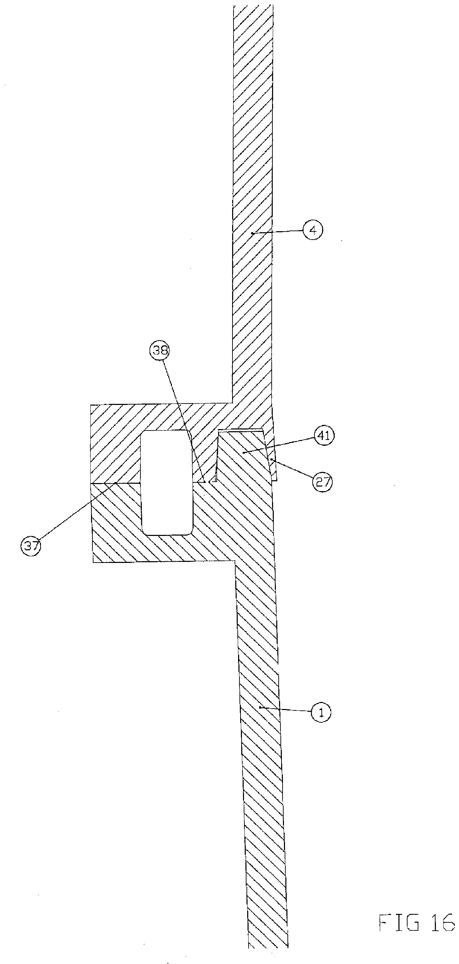

Figure 16 is a cross-sectional view of yet still another preferred embodiment of the closure between the cover (4) and the base (1) of the electrical insulating box with two air-tightness degrees for electricity, information technology and/or telephony according to the present invention, wherein there is a contact line by flexion (27) perimeter between the cover (4) and the base (1).

The walls of the perimeter slot (43) of the cover (4) of this electrical insulating box fit into a protrusion (41) with perimeter closure of the base (1) providing a perimeter contact line by internal flexion (27) and two support perimeter surfaces (37) and (38), one internal and another external one, on the closure zone of the box between the cover (4) and the base (1).

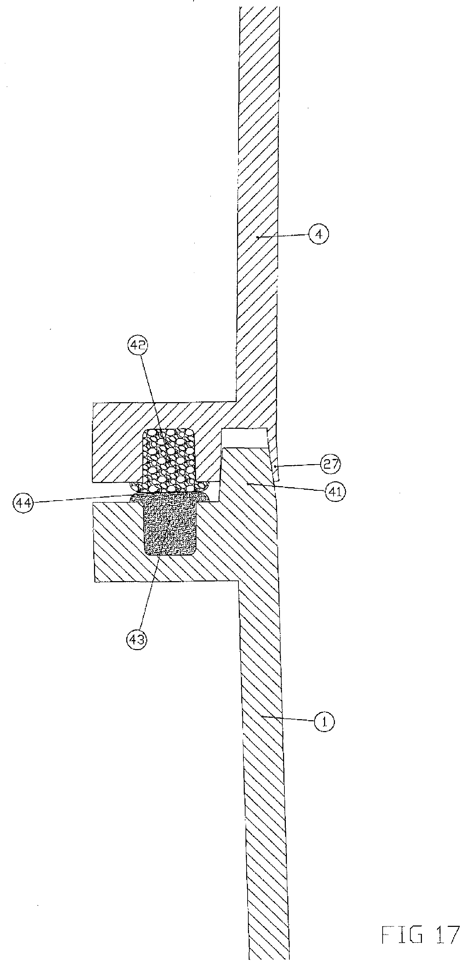

Figure 17 is a cross-sectional view of the still yet another preferred embodiment of the closure between the cover (4) and the base (1) of Figure 16 with a closure made of two elastic weather strips, one (41) on the cover (4) and another one (43) disposed at the base (1).

This alternative embodiment of higher air-tightness degree of the electrical insulating box of the present invention comprises two "mushroom" section elastic weather strips, a weather strip (42) on the cover (4) and a weather strip (43) inserted into the slot of the base (1) providing a contact surface (44) and a contact line by flexion (27) against the protrusion (41) on the closure zone of the box.

### Industrial application of the invention

The present invention is applicable in electric, information technology and/or telephony installations. On them, and depending of their location, required the air-tightness degree will depend, for example, if the box with its electrical components is to be located outside, the box may be placed with no weather strip, but if it is to be located in a car wash, with immersion feasibility, the placement of a weather strip should be included. Also, by having the above mentioned screws with ribbons, electrical components may be placed on the cover.

## Claims

1. An electrical insulating box for electricity, information technology and/or telephony, the structure of which is capable of providing two air-tightness degrees, said electrical insulating box comprising:
a) a base (1) with four orifices (2) and a protrusion (3) with perimeter closure on the border of said base (1);
b) a cover (4) having four orifices (5) for passing screws and a slot (6) with perimeter closure on the border of said cover (4);
c) four circular covers (12) that hide the head of the screws for fixing the box to the masonry;
d) a set of four screws (7 and 10) for fixing the cover (4) to the base (1); and
e) four circular covers (11) that hide the head of the screws (7 and 10);
the set of four screws (7 and 10) consists of two first screws (7) and two second screws (10), wherein
the first screws (7) have fastenings (18) for closing the cover (4) on the base (1) through the corresponding orifices (2) and
the second screws (10) have fastenings (19) for closing the cover (4) on the base (1) through the corresponding orifices (2),
wherein the first two screws (7) and the second two screws (10) are disposed on contiguous corners to the base (1); the protrusion (3) with perimeter closure of the base (1), when the electrical insulating box is closed, engages into the slot (6) with perimeter closure;
said electrical insulating box **CHARACTERIZED in that**:
the first screws (7) being flexed when the cover is separated from the base by a ribbon (8) acting as a hinge on each screw (7), are capable of being flexed by said ribbon (8) arranged at 45 degrees from the fastening line (18) on the body of each screw (7) for closing the cover (4) with the base (1), and at 45 degrees from the fastening line (9) present at the end of said screws (7) which is in turn at 90 degrees from the fastening line (18) for closing the cover (4) with the base (1)
said protrusion (3) contacting and being flexed on all the perimeter (13) providing at least one perimeter contact line by flexing said protrusion (3) against one of the edges of the slot (6) of the cover (4), so that the electrical insulating box is provided with a first air-tightness degree and
the slot (6) of the cover (4) comprises a gap for placing an elastic weather strip (17) which, upon insertion into said slot (6) of the cover (4) and when the electrical insulating box is closed, provides three perimeter contact lines (14), (15) and (16) in addition to the perimeter contact line (13) by flexing the protrusion (3), so that the electrical insulating box is provided with a second air-tightness degree which is greater than the first air-tightness degree previously mentioned only by flexing the protrusion (3).

2. The electrical insulating box of claim 1, **CHARACTERIZED in that** it comprises an "S" section elastic weather strip (17) inserted into the slot of the cover (4) providing three perimeter contact lines (14), (15) and (16) on the closure zone of the box between the cover (4) and the base (1), when the electrical insulating box is closed.

3. The electrical insulating box of claim 1, **CHARACTERIZED in that** alternatively, in another embodiment under the same concept, the walls of the perimeter slot of the cover (4) fit inside a "W" section perimeter slot with perimeter closure of the base (1) providing two perimeter contact lines by flexion (20) and (21) of the cover (4) on the closure zone of the box between the cover (4) and the base (1), when the electrical insulating box is closed.

4. The electrical insulating box of claim 3, **CHARACTERIZED in that** it comprises an "O" section elastic weather strip (22) inserted into the slot of the cover (4) providing three contact lines (29), (30) and (31) on the closure zone of the box, when the electrical insulating box is closed.

5. The electrical insulating box of claim 1, **CHARACTERIZED in that** alternatively in another embodiment under the same concept, the walls of the perimeter slot of the cover (4) fit inside a "U" section perimeter slot with perimeter closure of the base (1) providing one perimeter contact line by external flexion (23) of the cover (4) and two support perimeter surfaces (32) and (33) inside the closure zone of the box between the cover (4) and the base (1), when the electrical insulating box is closed.

6. The electrical insulating box of claim 5, **CHARACTERIZED in that** it comprises an "O" section elastic weather strip (24) inserted into the slot of the base (1) providing three contact surfaces (32), (33) and (34) and one perimeter contact line by flexion (23) of the cover (4) on the closure zone of the box, when the electrical insulating box is closed.

7. The electrical insulating box of claim 1, **CHARACTERIZED in that** alternatively in another embodiment under the same concept, the walls of the perimeter slot of the cover (4) fit inside a "U" section perimeter slot with perimeter closure of the base (1) providing one perimeter contact line by internal flexion (25) of the cover (4) and two support perimeter surfaces (35) and (36), internal and external, on the closure zone of the box between the cover (4) and the base (1), when the electrical insulating box is closed.

8. The electrical insulating box of claim 7, **CHARACTERIZED in that** it comprises an "O" section elastic weather strip (26) inserted into the slot of the base (1) providing three contact surfaces (35), (36) and (40), and one perimeter contact line by flexion (25) of the cover (4) on the closure zone of the box, when the electrical insulating box is closed.

9. The electrical insulating box of claim 1, **CHARACTERIZED in that** alternatively in another embodiment under the same concept, the walls of the perimeter slot of the cover (4) fit inside a protrusion (41) with perimeter closure of the base (1) providing one perimeter contact line by flexion (27) of the internal cover (4) and two support perimeter surfaces (37) and (38), internal and external, on the closure zone of the box between the cover (4) and the base (1), when the electrical insulating box is closed.

10. The electrical insulating box of claim 9, **CHARACTERIZED in that** it comprises a "mushroom" section elastic weather strip (42) inserted into a second slot of the cover (4) and, further, a "mushroom" section elastic weather strip (43) inserted into a slot of the base (1), wherein both elastic weather strips (42 and 43) are opposite to each other providing a contact surface (44) and a contact line by flexion (27) of the cover (4) against the protrusion (41) on the closure zone of the box, when the electrical insulating box is closed.

## Patentansprüche

1. Elektrisch isolierender Kasten für Strom, Informatik und/oder Telefonie, dessen Struktur in der Lage ist, zwei Dichtigkeitsgrade bereitzustellen, wobei der elektrisch isolierende Kasten Folgendes umfasst:
a) eine Basis (1) mit vier Öffnungen (2) und einem Vorsprung (3) mit Umfangsabschluss an dem Rand der Basis (1);
b) einen Deckel (4) mit vier Öffnungen (5) für einen Durchgang von Schrauben und einen Schlitz (6) mit Umfangsabschluss an dem Rand des Deckels (4);
c) vier kreisförmige Deckel (12), die den Kopf der Schrauben zum Befestigen des Kastens an dem Mauerwerk abdecken;
d) einen Satz aus vier Schrauben (7 und 10) zum Befestigen des Deckels (4) an der Basis (1); und
e) vier kreisförmige Deckel (11), die den Kopf der Schrauben (7 und 10) abdecken; wobei der Satz aus vier Schrauben (7 und 10) aus zwei ersten Schrauben (7) und zwei zweiten Schrauben (10) besteht, wobei
die ersten Schrauben (7) Befestigungen (18) zum Schließen des Deckels (4) auf der Basis (1) durch die entsprechenden Öffnungen (2) aufweisen und
die zweiten Schrauben (10) Befestigungen (19) zum Schließen des Deckels (4) auf der Basis (1) durch die entsprechenden Öffnungen (2) aufweisen,
wobei die ersten zwei Schrauben (7) und die zweiten zwei Schrauben (10) an anliegenden Ecken der Basis (1) angeordnet sind; wobei der Vorsprung (3) mit Umfangsabschluss der Basis (1), wenn der elektrisch isolierender Kasten geschlossen ist, in den Schlitz (6) mit Umfangsabschluss eingreift; wobei der elektrisch isolierende Kasten **dadurch gekennzeichnet ist, dass**:
die ersten Schrauben (7), die, wenn der Deckel von der Basis getrennt wird, durch ein Band (8) gebogen werden, das als ein Gelenk an jeder Schraube (7) dient, in der Lage sind, durch das Band (8) gebogen zu werden, das 45 Grad von der Befestigungslinie (18) des Körpers an jeder Schraube (7) zum Schließen des Deckels (4) mit der Basis (1), und 45 Grad von der Befestigungslinie (9) angeordnet ist, die am Ende der Schrauben (7) vorhanden ist, die wiederum 90 Grad von der Befestigungslinie (18) zum Schließen des Deckels (4) mit der Basis (1) ist, der Vorsprung (3), der mit dem gesamten Umfang (13) in Kontakt ist und darauf gebogen wird, mindestens eine Umfangskontaktlinie bereitstellt, indem der Vorsprung (3) gegen einen der Ränder des Schlitzes (6) des Deckels (4) gebogen wird, sodass der elektrisch isolierende Kasten mit einem ersten Dichtigkeitsgrad bereitgestellt ist und
der Schlitz (6) des Deckels (4) einen Spalt zum Einsetzen einer elastischen Dichtleiste (17) umfasst, die, wenn sie in den Schlitz (6) des Deckels (4) eingesetzt und wenn der elektrisch isolierender Kasten geschlossen ist, drei Umfangskontaktlinien (14), (15) und (16) zusätzlich zu der Umfangskontaktlinie (13) durch Biegen des Vorsprungs (3) bereitstellt, sodass der elektrisch isolierende Kasten mit einem zweiten Dichtigkeitsgrad bereitgestellt ist, der größer als der erste vorher erwähnte Dichtigkeitsgrad nur durch Biegen des Vorsprungs (3) ist.

2. Elektrisch isolierender Kasten nach Anspruch 1, **dadurch gekennzeichnet, dass** er eine S-förmige elastische Dichtleiste (17) umfasst, die in den Schlitz des Deckels (4) eingesetzt ist, wodurch drei Umfangskontaktlinien (14), (15) und (16) an der Verschlusszone des Kastens zwischen dem Deckel (4) und der Basis (1) bereitgestellt sind, wenn der elektrisch isolierende Kasten geschlossen ist.

3. Elektrisch isolierender Kasten nach Anspruch 1, **dadurch gekennzeichnet, dass** alternativ, in einer anderen Ausführungsform unter demselben Konzept, die Wände des Umfangsschlitzes des Deckels (4) in einen W-förmigen Umfangsschlitz mit Umfangsabschluss der Basis (1) passen, wodurch zwei Umfangskontaktlinien durch Biegung (20) und (21) des Deckels (4) an der Verschlusszone des Kastens zwischen dem Deckel (4) und der Basis (1) bereitgestellt sind, wenn der elektrisch isolierende Kasten geschlossen ist.

4. Elektrisch isolierender Kasten nach Anspruch 3, **dadurch gekennzeichnet, dass** er eine O-förmige elastische Dichtleiste (22) umfasst, die in den Schlitz des Deckels (4) eingesetzt ist, wodurch drei Kontaktlinien (29), (30) und (31) an der Verschlusszone des Kastens bereitgestellt sind, wenn der elektrisch isolierende Kasten geschlossen ist.

5. Elektrisch isolierender Kasten nach Anspruch 1, **dadurch gekennzeichnet, dass** alternativ, in einer anderen Ausführungsform unter demselben Konzept, die Wände des Umfangsschlitzes des Deckels (4) in einen U-förmigen Umfangsschlitz mit Umfangsabschluss der Basis (1) passen, wodurch eine Umfangskontaktlinien durch externe Biegung (23) des Deckels (4) und zwei Unterstützungsumfangsflächen (32) und (33) in der Verschlusszone des Kastens zwischen dem Deckel (4) und der Basis (1) bereitgestellt sind, wenn der elektrisch isolierende Kasten geschlossen ist.

6. Elektrisch isolierender Kasten nach Anspruch 5, **dadurch gekennzeichnet, dass** er eine O-förmige elastische Dichtleiste (24) umfasst, die in den Schlitz der Basis (1) eingesetzt ist, wodurch drei Kontaktflächen (32), (33) und (34) und eine Umfangskontaktlinie durch Biegung (23) des Deckels (4) an der Verschlusszone des Kastens bereitgestellt sind, wenn der elektrisch isolierende Kasten geschlossen ist.

7. Elektrisch isolierender Kasten nach Anspruch 1, **dadurch gekennzeichnet, dass** alternativ, in einer anderen Ausführungsform unter demselben Konzept, die Wände des Umfangsschlitzes des Deckels (4) in einen U-förmigen Umfangsschlitz mit Umfangsabschluss der Basis (1) passen, wodurch eine Umfangskontaktlinien durch interne Biegung (25) des Deckels (4) und zwei Unterstützungsumfangsflächen (35) und (36), innen und außen, an der Verschlusszone des Kastens zwischen dem Deckel (4) und der Basis (1) bereitgestellt sind, wenn der elektrisch isolierende Kasten geschlossen ist.

8. Elektrisch isolierender Kasten nach Anspruch 7, **dadurch gekennzeichnet, dass** er eine O-förmige elastische Dichtleiste (26) umfasst, die in den Schlitz der Basis (1) eingesetzt ist, wodurch drei Kontaktflächen (35), (36) und (40) und eine Umfangskontaktlinie durch Biegung (25) des Deckels (4) an der Verschlusszone des Kastens bereitgestellt sind, wenn der elektrisch isolierende Kasten geschlossen ist

9. Elektrisch isolierender Kasten nach Anspruch 1, **dadurch gekennzeichnet, dass** alternativ, in einer anderen Ausführungsform unter demselben Konzept, die Wände des Umfangsschlitzes des Deckels (4) in einen Vorsprung (41) mit Umfangsabschluss der Basis (1) passen, wodurch eine Umfangskontaktlinien durch Biegung (27) des inneren Deckels (4) und zwei Unterstützungsumfangsflächen (37) und (38), innen und außen, an der Verschlusszone des Kastens zwischen dem Deckel (4) und der Basis (1) bereitgestellt sind, wenn der elektrisch isolierende Kasten geschlossen ist.

10. Elektrisch isolierender Kasten nach Anspruch 9, **dadurch gekennzeichnet, dass** er eine pilzförmige elastische Dichtleiste (42) aufweist, die in einen zweiten Schlitz des Deckels (4) eingesetzt ist, und ferner eine pilzförmige elastische Dichtleiste (43), die in einen Schlitz der Basis (1) eingesetzt ist, wobei beide elastischen Dichtleistes (42 und 43) gegenüber voneinander sind und eine Kontaktfläche (44), wodurch eine Kontaktlinie durch Biegung (27) des Deckels (4) gegen den Vorsprung (41) an der Verschlusszone des Kastens bereitgestellt ist, wenn der elektrisch isolierende Kasten geschlossen ist.

## Revendications

1. Boîte d'isolation électrique pour l'électricité, les technologies de l'information et/ou la téléphonie, dont la structure est capable de fournir deux degrés d'étanchéité à l'air, ladite boîte d'isolation électrique comprenant :
a) une base (1) avec quatre orifices (2) et une saillie (3) avec une fermeture périphérique sur le bord de ladite base (1) ;
b) un couvercle (4) disposant de quatre orifices (5) pour l'introduction de vis et une fente (6) avec une fermeture périphérique sur le bord dudit couvercle (4) ;
c) quatre couvercles circulaires (12) qui cachent la tête des vis servant à la fixation de la boîte à la maçonnerie ;
d) un ensemble de quatre vis (7 et 10) servant à la fixation du couvercle (4) à la base (1) ; et
e) quatre couvercles circulaire (11) qui cachent la tête des vis (7 et 10) ;
l'ensemble des quatre vis (7 et 10) étant composé de deux premières vis (7) et de deux secondes vis (10), dans laquelle
les premières vis (7) disposent d'attaches (18) servant à la fermeture du couvercle (4) sur la base (1) via les orifices correspondants (2) et
les secondes vis (10) disposent d'attaches (19) servant à la fermeture du couvercle (4) sur la base (1) via les orifices correspondants (2),
dans laquelle les deux premières vis (7) et les deux secondes vis (10) sont disposées sur des angles contigus sur la base (1) ; la saillie (3) avec la fermeture périphérique à la base (1), lorsque la boîte d'isolation électrique est fermée, s'engage dans la fente (6) avec la fermeture périphérique ; ladite boîte d'isolation électrique **CARACTÉRISÉE en ce que** :
les premières vis (7), étant pliées lorsque le couvercle est séparé de la base par un ruban (8) agissant comme une charnière sur chaque vis (7), sont capables d'être pliées par ledit ruban (8) disposé à 45 degrés de la ligne de fixation (18) sur le corps de chaque vis (7) servant à la fermeture du couvercle (4) avec la base (1), et à 45 degrés de la ligne de fixation (9) présente à l'extrémité desdites vis (7) qui est à son tour à 90 degrés de la ligne de fixation (18) servant à la fermeture du couvercle (4) avec la base (1)
ladite saillie (3) étant en contact avec tout le périmètre (13), et étant pliée sur l'ensemble de ce dernier, fournit au moins une ligne de contact périphérique en pliant ladite saillie (3) sur l'une des extrémités de la fente (6) du couvercle (4), de sorte que la boîte d'isolation électrique est dotée d'un premier degré d'étanchéité à l'air et
la fente (6) du couvercle (4) comprend un espace servant au placement d'un bourrelet d'étanchéité élastique (17) qui, suite à l'insertion dans ladite fente (6) du couvercle (4) et lorsque la boîte d'isolation électrique fermée, fournit trois lignes de contact périphériques (14), (15) et (16), en plus de la ligne de contact périphérique (13), en pliant la saillie (3), de sorte que la boîte d'isolation électrique est dotée d'un second degré d'étanchéité à l'air qui est supérieur au premier degré d'étanchéité à l'air, précédemment mentionné, juste en pliant la saillie (3).

2. Boîte d'isolation électrique selon la revendication 1, **CARACTÉRISÉE en ce qu'**elle comprend un bourrelet d'étanchéité élastique de section « en S » (17) inséré dans la fente du couvercle (4) fournissant trois lignes de contact périphériques (14), (15) et (16) sur la zone de fermeture de la boîte entre le couvercle (4) et la base (1), lorsque la boîte d'isolation électrique est fermée.

3. Boîte d'isolation électrique selon la revendication 1, **CARACTÉRISÉE en ce qu'**alternativement, dans un autre mode de réalisation selon le même concept, les parois de la fente périphérique du couvercle (4) rentrent dans une fente périphérique de section « en W » avec la fermeture périphérique sur la base (1) fournissant deux lignes de contact périphériques par flexion (20) et (21) du couvercle (4) sur la zone de fermeture de la boîte entre le couvercle (4) et la base (1), lorsque la boîte d'isolation électrique est fermée.

4. Boîte d'isolation électrique selon la revendication 3, **CARACTÉRISÉE en ce qu'**elle comprend un bourrelet d'étanchéité élastique de section « en O » (22) inséré dans la fente du couvercle (4) fournissant trois lignes de contact (29), (30) et (31) sur la zone de fermeture de la boîte, lorsque la boîte d'isolation électrique est fermée.

5. Boîte d'isolation électrique selon la revendication 1, **CARACTÉRISÉE en ce qu'**alternativement, dans un autre mode de réalisation selon le même concept, les parois de la fente périphérique du couvercle (4) rentrent dans une fente périphérique de section « en U » avec la fermeture périphérique sur la base (1) fournissant une ligne de contact périphériques par flexion externe (23) du couvercle (4) et deux surfaces périphériques de support (32) et (33) dans la zone de fermeture de la boîte entre le couvercle (4) et la base
(1), lorsque la boîte d'isolation électrique est fermée.

6. Boîte d'isolation électrique selon la revendication 5, **CARACTÉRISÉE en ce qu'**elle comprend un bourrelet d'étanchéité élastique de section « en O » (24) inséré dans la fente de la base (1) fournissant trois surfaces de contact (32), (33) et (34) et une ligne de contact périphérique par flexion (23) du couvercle (4) sur la zone de fermeture de la boîte, lorsque la boîte d'isolation électrique est fermée.

7. Boîte d'isolation électrique selon la revendication 1, **CARACTÉRISÉE en ce qu'**alternativement, dans un autre mode de réalisation selon le même concept, les parois de la fente périphérique du couvercle (4) rentrent dans une fente périphérique de section « en U » avec la fermeture périphérique sur la base (1) fournissant une ligne de contact périphériques par flexion interne (25) du couvercle (4) et deux surfaces périphériques de support (35) et (36), interne et externe, sur la zone de fermeture de la boîte entre le couvercle (4) et la base (1), lorsque la boîte d'isolation électrique est fermée.

8. Boîte d'isolation électrique selon la revendication 7, **CARACTÉRISÉE en ce qu'**elle comprend un bourrelet d'étanchéité élastique de section « en O » (26) inséré dans la fente de la base (1) fournissant trois surfaces de contact (35), (36) et (40) et une ligne de contact périphérique par flexion (25) du couvercle (4) sur la zone de fermeture de la boîte, lorsque la boîte d'isolation électrique est fermée.

9. Boîte d'isolation électrique selon la revendication 1, **CARACTÉRISÉE en ce qu'**alternativement, dans un autre mode de réalisation selon le même concept, les parois de la fente périphérique du couvercle (4) rentrent dans une saillie avec la fermeture périphérique sur la base (1) fournissant une ligne de contact périphériques par flexion (27) du couvercle interne (4) et deux surfaces périphériques de support (37) et (38), interne et externe, sur la zone de fermeture de la boîte entre le couvercle (4) et la base (1), lorsque la boîte d'isolation électrique est fermée.

10. Boîte d'isolation électrique selon la revendication 9, **CARACTÉRISÉE en ce qu'**elle comprend un bourrelet d'étanchéité élastique de section « en champignon » (42) inséré dans une seconde fente du couvercle (4) et, également, un bourrelet d'étanchéité élastique de section « en champignon » (43) inséré dans une fente de la base (1), dans laquelle les deux bourrelets d'étanchéité élastiques (42 et 43) sont face à face, fournissant une surface de contact (44) et une ligne de contact par flexion (27) du couvercle (4) sur la saillie (41) sur la zone de fermeture de la boîte, lorsque la boîte d'isolation électrique est fermée.
